**Europäisches Patentamt**

**European Patent Office**

**Office européen des brevets**

(19)

(11) Veröffentlichungsnummer: **0 502 225 A1**

# EUROPÄISCHE PATENTANMELDUNG

(12)

(21) Anmeldenummer: **91103366.0**

(22) Anmeldetag: **05.03.91**

(51) Int. Cl.5: **G03B 27/58**, G03B 42/04, B65H 3/54

(43) Veröffentlichungstag der Anmeldung:
**09.09.92 Patentblatt 92/37**

(84) Benannte Vertragsstaaten:
**DE FR GB IT SE**

(71) Anmelder: **Siemens Elema AB**
**Röntgenvägen 2**
**S-171 95 Solna 1(SE)**

(84) **SE**

(71) Anmelder: **Siemens Aktiengesellschaft**
**Wittelsbacherplatz 2**
**W-8000 München 22(DE)**

(84) **DE FR GB IT**

(72) Erfinder: **Björk, Erik**
**Roslagsgatan 57**
**S-113 54 Stockholm(SE)**
Erfinder: **Egerström, Johan**
**Fredrik Jahnsgränd 12**
**S-131 36 Nacka(SE)**
Erfinder: **Wiklund, Ola**
**Iljansbodavägen 7**
**S-175 76 Järfälla(SE)**

(54) **Blattfilmmagazin für einen Filmwechsler.**

(57) Die Erfindung bezieht sich auf ein Blattfilmmagazin (1) für einen Filmwechsler mit einem Gehäuse und einem Deckel, die einen Raum zur Aufbewahrung eines Stapels nicht getrennter Filmblätter (3) bilden, die an einer Filmebene (5) anliegen. Eine Transportvorrichtung ist zum Transportieren einzelner Filmblätter vom Filmstapel durch eine Filmaustrittsöffnung (4) des Blattfilmmagazins in das Aufnahmeteil des Filmwechslers (2) hinein vorgesehen. Um ein Blattfilmmagazin zu erhalten, das mit sehr einfachen Mitteln erreicht, daß nur jeweils ein Filmblatt aus dem Magazin heraustransportiert wird, wird erfindungsgemäß vorgeschlagen, daß das Blattfilmmagazin (1) im Anschluß zur Austrittsseite mit einer Steuervorrichtung (4,33) versehen ist, die das gewährleistet.

FIG 5

EP 0 502 225 A1

Die Erfindung bezieht sich auf ein Blattfilmmagazin für einen Filmwechsler mit einem Gehäuse und einem Deckel, die einen Raum zur Aufbewahrung eines Stapels nicht getrennter Filmblätter bilden, die an einer Filmebene anliegen, und mit einer Transportvorrichtung zum Transportieren einzelner Filmblätter vom Filmstapel durch die Filmaustrittsöffnung des Blattfilmmagazins in das Aufnahmeteil des Filmwechslers hinein.

Ein Blattfilmmagazin dieser Art ist durch die US-PS 4 541 625 bekannt. Die Transportvorrichtung für die Filmblätter umfaßt eine Platte, die mittels Zahnrädern und Federn bis zum obersten Filmblatt des Filmstapels abgesenkt werden kann. Danach verschiebt die Platte das Filmblatt nach hinten d.h. entgegen der Austrittsrichtung, wobei das hintere Ende des Filmblattes mittels Schienen angehoben und in einen Schlitz hineingeführt wird. Nach dieser Verschiebung des Filmblattes hebt die Platte von der Oberfläche des Filmblattes ab. In dieser Lage ist das vordere Ende des Filmblattes, das in der Ausgangslage mittels einer Rolle von der Filmaustrittsöffnung weg nach unten gedrückt wird, aus dieser gebogenen Lage herausgeführt worden und liegt nunmehr vor der Filmaustrittsöffnung. Eine Welle mit dazugehörenden Haken, die im Anschluß an den Schlitz angebracht ist, greift das hintere Ende des Filmblattes und schiebt auf diese Weise das Filmblatt durch die Filmaustrittsöffnung in das Aufnahmeteil hinein. Dieses Blattfilmmagazin ist im Aufbau sehr kompliziert und daher in der Herstellung teuer.

Ein Blattfilmmagazin der eingangs genannten Art, das nicht für einen Filmwechsler vorgesehen ist, ist durch die DE-OS 2 747 623 bekannt. Die Transportvorrichtung dieses Blattfilmmagazins umfaßt eine Druckplatte, die gegen das oberste Filmblatt eines Filmstapels drückt. Der Druck gegen das oberste Filmblatt beeinflußt auch das unterste Filmblatt, das dadurch gegen eine Transportrolle gedrückt wird, die das Filmblatt aus dem Magazin heraustransportiert. Da mehrere Filmblätter im Filmstaple durch statische Elektrizität zusammenkleben können, ist nicht auszuschließen, daß zwei Filmblätter gleichzeitig aus dem Magazin heraustransportiert werden.

Ein Filmwechsler mit einem integrierten gebogenen Blattfilmmagazin ist durch die US-PS 4 234 796 bekannt. Eine Transportrolle drückt gegen den Filmstapel und transportiert das oberste Filmblatt des Filmstapels zu weiteren Transportrollen, die das Filmblatt in die Aufnahmeeinheit hineintransportieren. Durch den beschriebenen Aufbau der Transportvorrichtung ist nicht sichergestellt, daß nur jeweils ein Filmblatt aus dem Magazin heraustransportiert wird.

Der Erfindung liegt die Aufgabe zugrunde, ein Blattfilmmagazin der Eingangs genannten Art zu schaffen, das mit sehr einfachen Mittel gewährleistet, daß nur jeweils ein Filmblatt aus dem Magazin heraustransportiert wird.

Diese Aufgabe ist erfindungsgemäß dadurch gelöst, daß das Blattfilmmagazin im Anschluß zur Austrittsseite mit einer Steuervorrichtung versehen ist, die gewährleistet, daß nur jeweils ein Filmblatt aus dem Magazin heraustransportiert wird. Die Steuervorrichtung umfaßt die Filmaustrittsöffnung, deren Höhe weniger als die Stärke von zwei Filmblättern beträgt, sowie mindestens einen ersten Niederhalter, der im Anschluß an die Filmaustrittsöffnung angebracht ist und mindestens ein Filmblatt gegen eine Filmebene drückt. Durch diesen sehr einfachen Aufbau der Steuervorrichtung für die Filmblätter ist gewährleistet, daß jeweils nur ein Filmblatt aus dem Blattfilmmagazin heraustransportiert wird. Der Niederhalter steuert die Filmblätter derart, daß die vordere Kante derjenigen Filmblätter, die aus dem Magazin heraustransportiert werden sollen, genau vor der Filmaustrittsöffnung zu liegen kommen, die ihrerseits durch ihr Höhenmaß sicherstellt, daß jeweils nur ein Filmblatt passieren kann.

In einer vorteilhaften Ausbildung der Erfindung wird vorgeschlagen, daß der erste Niederhalter einen Kopf aufweist, der an dem einen Ende einer Welle angebracht ist, die etwa parallel mit der Filmebene verläuft und deren freies Ende um eine Achse drehbar angeordnet ist. Hierdurch ist erreicht, daß der Kopf eine gegen die Filmebene senkrechte Bewegung dicht an der Wand der Fimaustrittsöffnung beschreibt, wodurch das Filmblatt unmittelbar vor und in der Zeit, in der das Filmblatt aus der Filmaustrittsöffnung heraustransportiert wird, gegen die Filmebene gedrückt wird.

Eine vorteilhafte Weiterbildung der Erfindung ergibt sich daraus, daß die Welle derart federbelastet ist, daß sie den Kopf gegen die Oberfläche des Filmblattes drückt. Auf diese Weise kann der Druck, der erforderlich ist, um das Filmblatt in die gewünschte Lage zu bringen oder dort zu halten, erzeugt werden.

Eine konstruktiv einfache Ausgestaltung der Erfindung wird erhalten, indem der Kopf um die Längsachse der Welle drehbar an dieser angebracht ist. Hierdurch kann die Anlageoberfläche des Kopfes immer an der Filmebene anliegen unabhängig davon, ob diese eben oder uneben ist.

Nach einer weiteren Ausgestaltung der Erfindung wird vorgeschlagen, daß der Teil des Kopfes, der an der Oberfläche eines Filmblattes anliegt, an der der Filmaustrittsöffnung abgewandten Kante abgerundet bzw. abgephast ist. Hierdurch ist sichergestellt, daß der Kopf immer von der Filmebene abhebt, wenn ein Filmblatt gegen diesen drückt.

Eine besonders günstige Ausgestaltung der Erfindung wird erhalten, wenn die Transportvorrichtung ein Transportrad umfaßt, das im Bereich der Austrittsöffnung angeordnet ist und mittels Antriebsmitteln in der Transportrichtung der Filmblätter angetrieben wird, und wenn das Transportrad an weitere Mittel angeschlossen ist, die den Abstand zwischen einem Filmblatt und dem Transportrad derart variieren, daß das Transportrad beim Transportieren eines Filmblattes vom Blattfilmmagazin zum Aufnahmeteil an der Oberfläche des Filmblattes anliegt und nach einem beendeten Filmtransport von der Oberfläche des Filmblattes entfernt wird. Genau vor dem Transportrad ist ein zweiter Niederhalter angebracht, der gegen die Oberseite des Filmblattes in Richtung auf das Transportrad drückt. Diese Ausführungsform ermöglicht einen sicheren kontinuierlichen Transport der Filmblätter aus dem Magazin. Der Niederhalter drückt dauernd gegen den Filmstapel, so daß die Transportrolle in das nächstliegende Filmblatt eingreift.

In einer vorteilhaften Weiterbildung der Erfindung wird vorgeschlagen, daß die Filmblätter im Raum durch Mittel in einem gebogenen Zustand aufbewahrt werden. Hierdurch wird ein kleines und kompaktes Blattfilmmagazin erhalten.

Zur konstruktiven Vereinfachung der Erfindung wird vorgeschlagen, den zweiten Niederhalter als ein langgestrecktes Teil auszubilden, das auf der Achse für den ersten Niederhalter drehbar angebracht ist.

In einer weiteren Ausbildung der Erfindung wird vorgeschlagen, daß die Federkraft für den ersten und den zweiten Niederhalter unterschiedlich groß ist. Dies ist vorteilhaft, da der erste Niederhalter, insbesondere in Verbindung mit einem Magazin, bei der die Filmblätter in einem gebogenen Zustand aufbewahrt werden, lediglich gegen einzelne Filmblätter drückt, während der zweite Niederhalter einen Stapel mit Filmblättern herunterdrücken soll.

Im Hinblick auf eine weitere Ausgestaltung der Erfindung wird vorgeschlagen, daß das Transportrad nach einem abgeschlossenen Filmtransport mit Hilfe von Trennorganen von der Oberfläche des Filmblattes getrennt wird, bevor es durch Mittel von dieser Oberfläche entfernt wird. Dies bedeutet, daß das Transportrad unmittelbar nach dem Transport eines Filmblattes von dessen Oberfläche entfernt wird, wodurch rasch ein neues Filmblatt in eine Startposition gebracht werden kann.

In einer Weiterentwicklung der vorgeschlagenen Ausgestaltung nach der Erfindung wird vorgeschlagen, daß die Mittel eine im Magazin angeordnete Rolle enthalten, die an einer Kurvenscheibe anliegt, die derart geformt ist, daß sie mit Hilfe der Rolle in einer ersten Lage das Transportrad an die Oberfläche eines Filmblattes drückt und in einer zweiten Lage von dieser Oberfläche abhebt.

Bei einer vorteilhaften Weiterentwicklung der Erfindung wird in dem Moment, wenn die Kurvenscheibe anfängt, sich gegen die Filmtransportrichtung zu drehen, die Rolle durch das Trennorgan rasch aus ihrer Lage gebracht, so daß das Transportrad von der Oberfläche des Filmblattes getrennt wird. Hierdurch wird die beschriebene unmittelbare Trennung des Transportrades von der Oberfläche des Filmblattes erreicht.

Im Rahmen der Erfindung wird auch vorgeschlagen, daß das Trennorgan eine Wippe umfaßt, die um eine Achse drehbar ist und an der eine Rolle um eine zweite Achse drehbar angeordnet ist. Durch die Wippe kann die Rolle in einfacher Weise schnell aus ihrer Lage an der Kurvenscheibe derart seitlich verschoben werden, daß das Transportrad unmittelbar von der Oberfläche des Filmblattes abhebt.

Die Erfindung ist nachfolgend anhand eines in den Zeichnungen dargestellten Ausführungsbeispiels näher erläutert. Es zeigen:

FIG 1 bis 4 Seitenansichten eines Blattfilmmagazins mit einer Transportvorrichtung nach der Erfindung, wobei die Transportvorrichtung in verschiedenen Lagen gezeigt wird, und

FIG 5 eine Steuervorrichtung für Filmblätter.

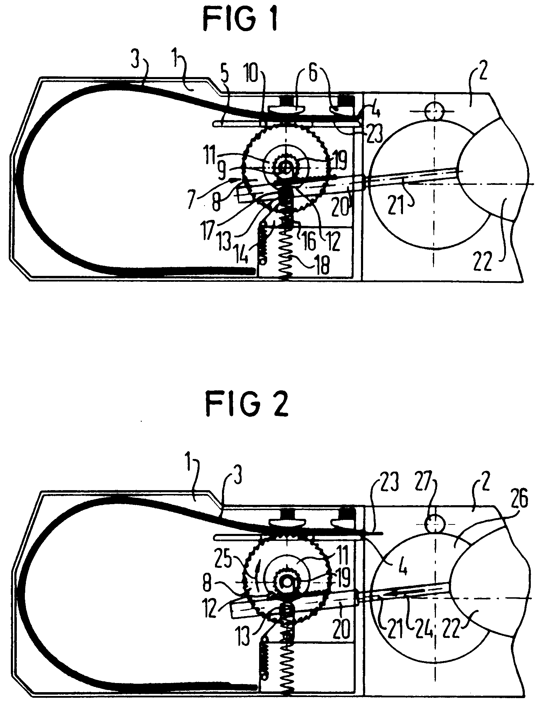

In der FIG 1 ist ein Blattfilmmagazin 1 gezeigt, das an dem Aufnahmeteil 2 eines Filmwechslers angeschlossen ist. Das Blattfilmmagazin 1 ist mit einem Filmstapel 3 geladen, der im Magazin C-förmig angeordnet ist. Das vordere Ende des Filmstapels 3, d.h. das Ende, das an der Filmaustrittsöffnung 4 des Blattfilmmagazins liegt, ist zwischen einer Filmebene 5 und schematisch gezeigten Andruckteilen oder Niederhaltern für die Filmblätter in Form von federbelasteten Platten 6 eingespannt. Die Filmebene 5, auf der der Filmstapel 3 ruht, verläuft bis zu einer Austrittsöffnung 4 für die Filmblätter und ist achsfluchtend mit dieser. Im Anschluß zur Filmaustrittsöffnung 4 und unterhalb der Filmebene 5 ist eine Transportvorrichtung 7 angebracht. Die Transportvorrichtung 7 weist ein Transportrad 8 auf, das auf einer zur Filmebene 5 parallelen Welle 9 angeordnet ist und das durch eine Öffnung 10 in der Filmebene 5 in Verbindung mit dem Filmstapel 3 gebracht werden kann. Das Transportrad 8 kann vorzugsweise ein Zahnrad sein. An der Welle 9 ist auch eine Kurvenscheibe befestigt, die aus einer runden Scheibe 11 mit einer Ausnehmung 12 für eine Rolle 13 besteht, die mit Hilfe einer Wippe 14 dazu gebracht wird, an der Scheibe 11 anzuliegen. Die Wippe 14 ist um eine am Magazin befestigte Achse 16 drehbar. Die Rolle 13, die auf der Wippe 14 angebracht ist, ist um eine zweite Achse 17 drehbar. Die Achsen 16,17 der Rolle 13 und der Wippe 14 sind achsfluchtend zu der gemeinsamen Welle 9 für das Transportrad 8 und die Kurvenscheibe und senkrecht zur Filmebene 5 angeordnet. Das Transportrad 8 sowie die Scheibe 11 sind mit Hilfe einer Feder 18, deren eines Ende an der Welle 9 und deren anderes Ende am Boden des Blattfilmmagazins 1 befestigt ist, derart federbelastet, daß die Scheibe 11 gegen die Rolle 13 drückt. An der Welle 9 ist auch ein Zahnrad 19 befestigt, das im Eingriff mit einer Zahnstange 20 steht, die ihrerseits an einer weiteren Stange 21 befestigt ist, die von einer im Aufnahmeteil 2 angeordneten Exzenterscheibe 22 gesteuert wird.

In der FIG 1 ist die Transportvorrichtung 7 in ihrer Parklage gezeigt, was bedeutet, daß das Transportrad 8 vom untersten Filmblatt des Filmstapels 3 getrennt ist. Damit diese Lage erreicht wird, muß die Rolle 13 in der Ausnehmung 12 der Scheibe 11 liegen.

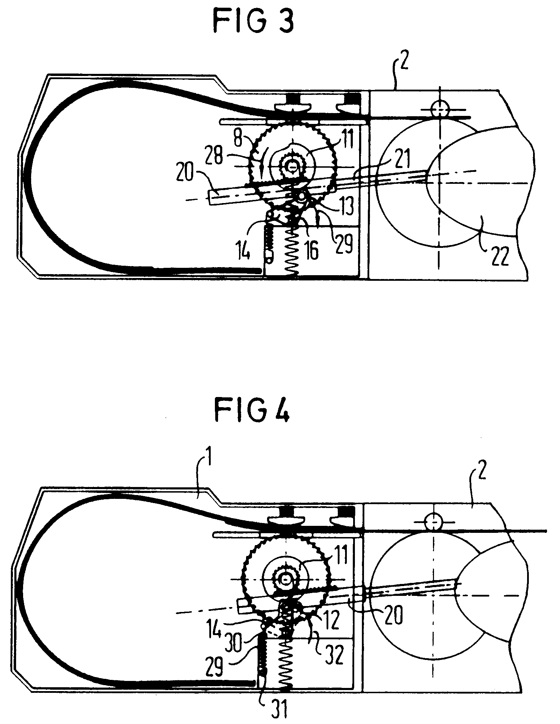

Wenn das Filmblatt 23 vom Filmstapel getrennt und in das Aufnahmeteil 2 transportiert werden soll, wird die Stange 21 und die Zahnstange 20 mit Hilfe der Exzenterscheibe 22 in Richtung des Pfeiles 24 gedrückt, wobei die Zahnstange 20 das Zahnrad 19 derart beeinflußt, daß es in der Richtung des Pfeiles 25 (FIG 2) gedreht wird. Gleichzeitig wird die Scheibe 11 sowie das Transportrad 8 in die gleiche Richtung mitgedreht. Durch die Drehung der Scheibe 11 verläßt die Rolle 13 unmittelbar ihre Position in der Ausnehmung 12 und drückt nun gegen die Scheibe 11 und damit gleichzeitig das Transportrad 8 nach oben, wodurch dieses gegen die Oberfläche des Filmblattes 23 drückt. Das Transportrad 8 transportiert auf diese Weise das Filmblatt durch die Filmaustrittsöffnung 4 in das Aufnahmeteil 2 bis zu weiteren Transporträdern 26, 27, die die vordere Kante des Filmblattes greifen und dieses für eine Aufnahme weitertransportieren. Das Transportrad 8 ist mit einem Freilaufrad versehen, so daß es während des schnellen Weitertransportes durch die weiteren Transporträder 26, 27 nicht bremst, sondern mit derselben Geschwindigkeit mitrollt. Ist nun die Zahnstange 20 in ihre äußerste Lage verschoben worden, hat die Scheibe 11 eine in der FIG 3 gezeigte Position eingenommen. In der FIG 3 ist auch gezeigt, daß die Zahnstange 20,wenn sie ihre äußerste Position erreicht hat, durch Beeinflussung der Stange 21 und der Exzenterscheibe 22 in die entgegengesetzte Richtung, d.h. in Richtung des Aufnahemteils 2, verschoben wird. In dem Augenblick, in dem die Zahnstange und damit auch die Scheibe 11 die Richtung ändern, wie der Pfeil 28 es zeigt, wird die Rolle 13 unmittelbar aus ihrer Lage gebracht. Dazu wird die Wippe 14 um die Achse 16 in der Richtung des Pfeiles 29 gedreht. Das Transportrad 8 verläßt gleichzeitig die Oberfläche des Filmblattes. Die Rolle 13 ist mit einer Freilaufradanordnung versehen und läuft auf der Scheibe 11 mit, wenn diese in Filmtransportrichtung gedreht wird. Wird die Scheibe 11 in entgegengesetzter Richtung gedreht, so sperrt die Rolle 13 und rutscht aus ihrer Lage.

In der FIG 4 ist gezeigt, daß die Scheibe 11 durch die bereits beschriebenen Mittel zurückgedreht wird, so daß deren Ausnehmung in eine Lage gebracht wird, bei der die Rolle 13 mittels der Wippe 14 in diese Ausnehmung 12 einrastet. Die Wippe 14 wird in ihre Ursprungslage zurückgedreht. Dies erfolgt mittels einer Feder 29, deren eines Ende an einem an der Wippe 14 angebrachten Zapfen 30 und deren anderes Ende an einem am Magazin angeordneten Zapfen 31 befestigt ist. Die strichpunktierte Wippe 14 in dieser FIG und der Pfeil 32 sollen die Drehung der Wippe 14 aus einer in der FIG 3 gezeigten Lage in einer Parklage darstellen.

In diesem Ausführungsbeispiel ist lediglich eine Transportvorrichtung 7 beschrieben. Es ist natürlich von Vorteil zwei Transportvorrichtungen 7 zu verwenden, die an den Enden derselben Welle 9, die sich über die gesamte Breite des Blattfilmmagazins 1 erstreckt, angebracht sind.

Der beschriebene Zyklus wird für jedes Filmblatt, das vom Magazin 1 zum Aufnahmeteil 2 transportiert werden soll, wiederholt. Durch die rasche Trennung des Transportrades 8 von der Oberfläche des Filmblattes schon bevor die Ausnehmung der Scheibe 11 ihre Parklage, in der die Rolle 13 in die Ausnehmung 12 einrastet, erreicht hat, ist eine sehr hohe Filmtransportfrequenz möglich.

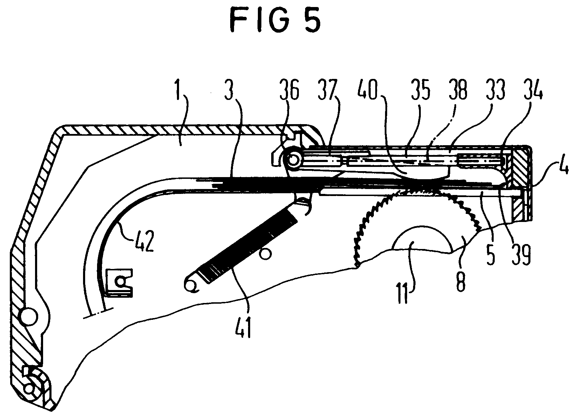

In der FIG 5 ist dargestellt, daß das Blattfilmmagazin 1 mit einer im Anschluß zur Filmaustrittsseite angeordneten Steuervorrichtung für die Filmblätter versehen ist. Die Steuervorrichtung umfaßt eine Filmaustrittsöffnung 4, deren Höhe weniger als die Stärke zweier Filmblätter beträgt, sowie mindestens einen federbelasteten ersten Niederhalter 33, der im Anschluß zur Filmaustrittsöffnung 4 angebracht ist. Der erste Niederhalter 33 weist einen Kopf 34 auf, der an einem Ende einer Welle 35 befestigt ist, die etwa parallel mit der Filmebene 5 verläuft und deren freies Ende um eine Achse 36 drehbar ist. Die Welle 35 ist durch eine Feder 37 belastet, so daß die Welle den Kopf 34 gegen die Filmebene 5 drückt. Der Kopf 34 ist auch um die Längsachse 38 der Welle 35 drehbar. Außerdem ist die Anlagefläche des Kopfes 34, die bei einem leeren Magazin an der Filmebene anliegt, an der der Filmaustrittsöffnung abgewandten Kante 39 abgerundet bzw. abgephast. Gegenüber dem Transportrad 8 ist ein zweiter Niederhalter 40 vorgesehen, der ein langgestrecktes Teil aufweist, das auf der Achse 36 des ersten Niederhalters 33 angebracht ist. Der zweite Niederhalter 40 ist mittels einer Zugfeder 41 federbelastet.

Beim Laden des Blattfilmmagazins mit einem Filmstapel 3 wird das eine Ende des Filmstapels 3 zwischen der Filmebene 5 und dem zweiten Niederhalter 40 bis zum Kopf 34 des ersten Niederhalters 33 hineingeschoben. Der Rest der Länge des Filmstapels 3 wird gegen das gebogene Blech 42 im Blattfilmmagazin gelegt. In dieser Lage drückt der zweite Niederhalter 40 gegen das oberste Filmblatt des Filmstapels 3, so daß das unterste Filmblatt gegen das Transportrad 8 drückt. Wenn das Transportrad 8 in Transportrichtung der Filmblätter angetrieben wird, wird das unterste Filmblatt gegen den Kopf 34 geschoben und hebt diesen auf Grund der abgerundeten bzw. abgephasten Kante 39 an. Der Kopf 34 drückt nun auf die Oberfläche des Filmblattes, so daß dessen vorderes Ende genau vor der Filmaustrittsöffnung 4 liegt. Selbst wenn zwei oder drei Filmblätter gleichzeitig transportiert werden und sich unter den Kopf 34 schieben, stoßen außer den untersten alle Filmblätter gegen die Wand oberhalb der Filmaustrittsöffnung 4. Wenn das unterste Filmblatt aus dem Magazin 1 heraustransportiert worden ist, drückt der Kopf 34 durch die Federkraft auf die Oberfläche des nächsten untersten Filmblattes, bis dieses genau vor die Filmaustrittsöffnung 4 zu liegen kommt, wodurch dieses Filmblatt heraustransportiert werden kann. Die Federbelastung des ersten Niederhalters 33 ist so angepaßt, daß der Kopf 34 ein Filmblatt, das gegen die Wand anliegt, herunterdrücken kann und gleichzeitig erlaubt, daß das Filmblatt aus der Filmaustrittsöffnung 4 transportiert werden kann, ohne daß der Kopf 34 das Filmblatt bremst.

Wegen der Zugfeder 41 für den zweiten Niederhalter 40 wird eine konstante Kraft gegen den Filmstapel 3 unabhängig von der Stärke des Filmstapel 3 erhalten. Die Größe der Federkraft der Zugfeder 41 ist auch an die notwendigen Kraft angepaßt, die erforderlich ist, damit die Zähne des Transportrades 8 das unterste Filmblatt des Filmstapels 3 greifen.

Durch die beschriebene Steuervorrichtung 4, 34 ist gewährleistet, daß jeweils lediglich nur ein Filmblatt aus dem Magazin heraustransportiert wird.

**Bezugszeichenliste**

| 1 | Blattfilmmagazin |
|---|---|
| 2 | Aufnahmeteil |
| 3 | Filmstapel |
| 4 | Filmaustrittsöffnung |
| 5 | Filmebene |
| 6 | Platte |
| 7 | Transportvorrichtung |
| 8,26,27 | Transportrad |
| 9 | Welle |
| 10 | Öffnung |
| 11 | Scheibe, Kurvenscheibe |
| 12 | Ausnehmung |
| 13 | Rolle |
| 14 | Wippe, Trennorgan |
| 16,17,36 | Achse |
| 18,29,37 | Feder |
| 19 | Zahnrad |
| 20 | Zahnstange |
| 21 | Stange |
| 22 | Exzenterscheibe |
| 23 | Filmblatt |
| 24,25,28,32 | Pfeil |
| 30,31 | Zapfen |
| 33 | erster Niederhalter |
| 34 | Kopf für den Niederhalter |
| 35 | Welle für den Niederhalter |
| 38 | Längsachse |
| 39 | Kante |
| 40 | zweiter Niederhalter |
| 41 | Zugfeder |
| 42 | gebogenes Blech |

**Patentansprüche**

1. Blattfilmmagazin für eine Filmwechsler mit einem Gehäuse und einem Deckel, die einen Raum zur Aufbewahrung eines Stapels nicht getrennter Filmblätter bilden, die an einer Filmebene anliegen, und mit einer Transportvorrichtung zum Transportieren einzelner Filmblätter vom Filmstapel durch die Filmaustrittsöffnung des Blattfilmmagazins in das Aufnahmeteil des Filmwechslers hinein, **dadurch gekennzeichnet**, daß das Blattfilmmagazin (1) im Anschluß zur Austrittsseite mit einer Steuervorrichtung (4,33) versehen ist, die gewährleistet, daß nur jeweils ein Filmblatt aus dem Magazin heraustransportiert wird.

2. Blattfilmmagazin nach Anspruch 1, **dadurch gekennzeichnet,** daß die Filmebene (5) bis zur Filmaustrittsöffnung (4) verläuft und achsfluchtend mit deren unterer Kante ist.

3. Blattfilmmagazin nach Ansparuch 1 oder 2, **dadurch gekennzeichnet,** daß die Steuervorrichtung (4,33) die Filmaustrittsöffnung (4) umfaßt, deren Höhe weniger als die Stärke von zwei Filmblättern (23) beträgt, sowie mindestens einen ersten Niederhalter (33), der im Anschluß an die Filmaustrittsöffnung angebracht ist und mindestens ein Filmblatt (23) gegen die Filmebene (5) drückt.

4. Blattfilmmagazin nach Anspruch 3, **dadurch gekennzeichnet,** daß der erste Niederhalter (33) einen Kopf (34) aufweist, der an dem einen Ende einer Welle (35) angebracht ist, die etwa parallel mit der Filmebene (5) verläuft und deren freies Ende um eine Achse (36) drehbar angeordnet ist.

5. Blattfilmmagazin nach Anspruch 3 oder 4, **dadurch gekennzeichnet,** daß die Welle (35) derart federbelastet ist, daß sie den Kopf (34) gegen die Oberfläche des Filmblattes drückt.

6. Blattfilmmagazin nach einem der Ansprüche 3 bis 5, **dadurch gekennzeichnet,** daß der Kopf (34) um die Längsachse (36) der Welle (35) drehbar an dieser angebracht ist.

7. Blattfilmmagazin nach einem der Ansprüche 3 bis 6, **dadurch gekennzeichnet,** daß der Teil des Kopfes (34), der an der Oberfläche eines Filmblattes (23) anliegt, an der der Filmaustrittsöffnung (4) abgewandten Kante (39) abgerundet bzw. abgephast ist.

8. Blattfilmmagazin nach einem der Ansprüche 1 bis 7, **dadurch gekennzeichnet,** daß die Transportvorrichtung ein Transportrad (8) umfaßt, das im Bereich der Filmaustrittsöffnung (4) angeordnet ist und mittels Antriebsmitteln (19 bis 22) in der Transportrichtung der Filmblätter angetrieben wird, und daß das Transportrad (8) an weitere Mittel (11,13) angeschlossen ist, die den Abstand zwischen einem Filmblatt und dem Transportrad (8) derart variieren, daß das Transportrad (8) beim Transportieren eines Filmblattes vom Blattfilmmagazin (1) zum Aufnahmeteil (2) an der Oberfläche des Filmblattes anliegt und nach einem beendeten Filmtransport von der Oberfläche des Filmblattes entfernt wird, und daß genau vor dem Transportrad (8) ein zweiter Niederhalter (40) angebracht ist, der gegen die Oberseite des Filmblattes in Richtung auf das Transportrad (8) drückt.

9. Blattfilmmagazin nach einem der Anspruche 1 bis 8, **dadurch gekennzeichnet,** daß die Filmblätter (23) im Raum durch Mittel in einem gebogenen Zustand aufbewahrt werden.

10. Blattfilmmagazin nach Anspruch 8, **dadurch gekennzeichnet,** daß der zweite Niederhalter (40) als ein langgestrecktes Teil ausgebildet ist, das auf der Achse (36) für den ersten Niederhalter (33) drehbar angebracht ist.

11. Blattfilmmagazin nach einem der Ansprüche 1 bis 10, **dadurch gekennzeichnet,** daß die Federkraft für den ersten und den zweiten Niederhalter (33,40) unterschiedlich groß ist.

12. Blattfilmmagazin nach einem der Ansprüche 8 bis 11, **dadurch gekennzeichnet,** daß das Transportrad (8) nach einem abgeschlossenen Filmtransport mit Hilfe von Trennorganen (14) von der Oberfläche des Filmblattes (23) getrennt wird, bevor es durch Mittel (11,13) von dieser Oberfläche entfernt wird.

13. Blattfilmmagazin nach einem der Ansprüche 8 bis 12, **dadurch gekennzeichnet,** daß die Mittel (11,13) eine im Magazin (1) angeordnete Rolle (13) enthalten, die an einer Kurvenscheibe (11) anliegt, die derart geformt ist, daß sie mit Hilfe der Rolle (13) in einer ersten Lage das Transportrad (8) an die Oberfläche eines Filmblattes (23) drückt und in einer zweiten Lage von dieser Oberfläche abhebt.

14. Blattfilmmagazin nach einem der Ansprüche 8 bis 13, **dadurch gekennzeichnet,** daß in dem Moment, in dem die Kurvenscheibe (11) anfängt sich gegen die Filmtransportrichtung zu drehen, die Rolle (13) durch das Trennorgan rasch aus ihrer Lage gebracht wird, so daß das Transportrad (8) von der Oberfläche des Filmblattes (23) getrennt wird.

15. Blattfilmmagazin nach einem der Ansprüche 8 bis 14, **dadurch gekennzeichnet,** daß das Trennorgan (14) eine Wippe umfaßt, die um eine Achse (16) drehbar ist und an der eine Rolle (13) um eine zweite Achse (17) drehbar angeordnet ist.

# FIG 1

# FIG 2

# FIG 3

# FIG 4

# FIG 5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 869 116 (KROEKER)<br>* Spalte 2, Zeile 61 - Spalte 3, Zeile 48; Abbildung 1 *<br>--- | 1-4 | G03B27/58<br>G03B42/04<br>B65H3/54 |
| D,Y | EP-A-0 006 780 (COMPAGNIE GENERALE DE RADIOLOG.)<br>* Seite 2, Zeile 15 - Seite 3, Zeile 26 *<br>--- | 1-4 | |
| A | XEROX DISCLOSURE JOURNAL<br>Bd. 5, Nr. 6, Dezember 1980,<br>Seiten 587 - 588;<br>JOHNSON: 'Normal force system for magnetic card feeder'<br>--- | 1-3 | |
| A | DE-A-2 007 594 (SCM CORP.)<br>* Seite 6, Zeile 12 - Seite 8, Zeile 18; Abbildung 1 *<br>--- | 1 | |
| A | EP-A-0 402 491 (SIEMENS ELEMA)<br>* Seite 2, Zeile 25 - Zeile 53 *<br>* Seite 3, Zeile 31 - Zeile 47; Abbildung 2 *<br>* Seite 5, Zeile 20 - Zeile 38; Abbildung 4 *<br>--- | 8,12-15 | **RECHERCHIERTE SACHGEBIETE (Int. Cl.5)** |
| A | EP-A-0 025 390 (COMPANIA GENERALE DI RADIOLOGIA)<br>* Zusammenfassung; Abbildungen 2-4 *<br><br>----- | 9 | G03B<br>B65H |

Der vorliegende Recherchenbericht wurde für alle Patentansprüche erstellt

| Recherchenort | Abschlußdatum der Recherche | Prüfer |
|---|---|---|
| DEN HAAG | 08 NOVEMBER 1991 | LANGE J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)